# EUROPÄISCHE PATENTSCHRIFT

(11) **EP 1 886 045 B1**
(45) Veröffentlichungstag und Bekanntmachung des Hinweises auf die Patenterteilung: **15.10.2008**
(21) Anmeldenummer: 06742840.9
(22) Anmeldetag: 09.05.2006
(51) Int. Cl.: F16D 65/60

(54) **GESTÄNGESTELLER FÜR TROMMELBREMSE**
LINKAGE POSITIONER FOR A DRUM BRAKE
REGLEUR DE TIMONERIE DESTINE A UN FREIN A TAMBOUR

(30) Priorität: 20.05.2005 DE 102005023408; 31.08.2005 DE 102005041343
(43) Veröffentlichungstag der Anmeldung: 13.02.2008
(73) Patentinhaber: KNORR-BREMSE SYSTEME FÜR NUTZFAHRZEUGE GMBH, 80809 München (DE)
(72) Erfinder: IRASCHKO, Johann, 85301 Schweitenkirchen (DE)
(74) Vertreter: Mattusch, Gundula
(86) Internationale Anmeldenummer: PCT/EP2006/004306
(87) Internationale Veröffentlichungsnummer: WO 2006/122672

(56) Entgegenhaltungen:
- EP-A- 0 598 290
- GB-A- 2 304 388
- US-A- 4 875 557
- US-A- 5 207 299

## Beschreibung

Die Erfindung betrifft einen Gestängesteller für eine Trommelbremse zum Nachstellen des bremsbedingten Verschleißes insbesondere an den Bremsbelägen, mit einer Überlastkupplung und einer Einwegdreh- bzw. Richtungskupplung.

Ein Gestängesteller für eine Trommelbremse zum Nachstellen des bremsbedingten Verschleisses geht z.B. aus US-A-4 875 557 hervor.

In schweren Nutzfahrzeugen werden häufig pneumatisch betätigte Trommelbremsen als Reibungsbremsen verwendet. Eine bevorzugte Bauart ist die so genannten S-Nocken-Trommelbremse.

Zur Erzeugung einer Bremskraft müssen die Bremsbacken der Trommelbremse, welche Bremsbeläge bilden oder tragen, in radialer Richtung von innen an die Trommel der Trommelbremse gedrückt werden. Bei der S-Nocken-Trommelbremse geschieht dies durch Verdrehen einer Bremswelle, welche an einem Ende eine Doppelevolvente in S-Form aufweist. An dieser Nocke stützen sich die beiden Bremsbacken mit ihren Enden ab, wobei die diesen Enden gegenüberliegenden Enden jeweils beispielsweise um einen Bolzen schwenkbar an einem Bremsträger befestigt sind. Für den Bremsvorgang muss die Bremswelle mit der S-Nocke solange verdreht werden, bis die Bremsbacken mit der gewünschten Kraft an der Trommel zur Anlage kommen. Diese Verdrehung der Bremswelle geschieht mit Hilfe eines druckluftbetätigten Bremszylinders, der mit seinem Kolben über einen Hebel ein Drehmoment erzeugt und auf die Bremswelle überträgt.

Da sich die Bremsbacken bzw. die Bremsbeläge beim Bremsen abnützen, ist es notwendig, diesen Bremsbelagverschleiß durch eine Justiervorrichtung auszugleichen. Zu diesem Zweck muss die Bremswelle mit der S-Nocke um einen entsprechenden Betrag in der Richtung verdreht werden, in welcher die Bremsbeläge zur Trommel hin beim Bremsvorgang verstellt werden, damit die Bremsbacken näher an die Innenseite der Trommel gerückt werden. Diese Richtung wird als Zuspannrichtung bezeichnet. Jedoch muss in der Ruhelage ein geringer Spalt zur Gewährleistung eines einwandfreien Löseverhaltens verbleiben. Diese Nachjustierung kann man in regelmäßigen Abständen auch manuell durchführen. Hierzu muss am Bremshebel der Bremswelle, an welchem der Bremszylinder mit seiner Kolbenstange angreift, eine Nachjustierung vorgenommen werden. Da die manuelle Nachstellung weder bedarfsgerecht noch kontinuierlich arbeitet, gehören so genannte automatische Gestängesteller zur Standardausrüstung von Fahrzeugen mit S-Nocken-Trommelbremsen.

Es gibt verschiedene Systeme von Gestängestellern. Eine erste Einteilung kann nach dem Nachstellprinzip vorgenommen werden. Bei einem Nachstellprinzip erfolgt die Nachstellung am Anfang des Bremsvorgangs, bei dem anderen Prinzip wird am Ende, das heißt beim Lösevorgang nachgestellt.

Weitere Unterschiede bestehen in der Art der Justierung der so genannten Kontroll- oder Steuerscheibe. Die Kontrollscheibe muss zur Ermöglichung der Nachstellfunktion mit einem Achsenteil drehfest verbunden werden, damit zwischen der Kontrollscheibe und dem Gestängesteller eine relative Dreh- bzw. Schwenkbewegung stattfinden kann. Hierbei ist darauf zu achten, dass beim Einbau des Gestängestellers diese Kontrollscheibe innerhalb des vorher festgelegten Arbeitsbereichs justiert wird.

Zur Vermeidung von Fehlern sind daher auch Gestängesteller mit einer so genannten Selbstjustierung entwickelt worden. Hierbei muss die Kontrollscheibe nur noch mit der Achse verbunden werden, eine Justierung ist nicht mehr notwendig.

Der Grundaufbau von Gestängestellern besteht im Wesentlichen aus einem Schneckenrad, einer Schnecke, einer Überlast- bzw. Lastschaltkupplung, einer Vorspannfeder, einer Einwegkupplung (meistens nach dem Schlingfederprinzip), und bei manueller Justierung aus einem Zahnrad, einer Zahnstange und einer so genannten Steuerscheibe bzw. Kontrollscheibe mit Kerbe, bzw. Bei automatischer Justierung aus einem weiteren Schneckenrad, einer Antriebsschnecke mit Zahnrad und einer Kontrollscheibe mit Außenverzahnung.
Diese Mechanik befindet sich in einem Gehäuse, welches einen Hebel aufweist, an dem der Bremszylinder angelenkt ist. Die Bremswelle ist mittels Keilverzahnung mit dem Schneckenrad gekoppelt. Die relativ zum Gestängesteller drehbare Kontrollscheibe ist wie oben erwähnt mit der Achse verbunden.

Als ein Beispiel zur Illustration sei hier EP 0 614 025 B1 genannt. In diesem Dokument ist eine Nachstellvorrichtung für eine Scheibenbremse beschrieben, wobei eine Anwendung der beiden oben genannten Funktionsprinzipien zusammen erfolgt, indem am Anfang des Bremsvorgangs nachgestellt und ein elastisches Element gespannt wird, welches sich beim Lösevorgang entspannt und eine weitere Nachstellung bewirkt.

Die derzeit auf dem Markt befindlichen Gestängesteller erfüllen bzgl. Dauerhaltbarkeit und Dauerfunktionsverhalten nicht immer die Erwartungen bzw. Anforderungen. Als ein für Verschleiß anfälliges Bauteil hat sich die Einwegkupplung in Form der Schlingfeder erwiesen. Die Funktion dieses Bauteils hängt stark von den Reibungsverhältnissen, von der Formgebung und der Formstabilität der Gegenflächen ab. Kommt es im Laufe der Zeit zu Verschleiß und/oder Änderungen der Reibverhältnisse, kann es zum Funktionsausfall des Bauteils und somit des gesamten Gestängestellers kommen.

Weiterhin ist der mechanische Aufwand für Gestängesteller (insbesondere mit Selbstjustierung) relativ groß, da für den Aufbau eine Vielzahl von Einzelteilen in Präzisionsausführung benötigt wird.

Die Aufgabe der vorliegenden Erfindung besteht darin, einen Gestängesteller der oben genannten Art mit einer Mechanik zu schaffen, die eine hohe Robustheit sowie einen einfachen Aufbau aufweist, wobei der Gestängesteller außerdem mit einer Selbstjustierung ausgerüstet ist. Eine weitere Zielsetzung besteht in einer möglichst kostengünstigen Herstellung.

Diese Aufgabe wird erfingdungsgemäß durch einen Gestängesteller mit den Merkmalen des Anspruchs 1 sowie durch eine Trommelbremse mit den Merkmalen des Anspruchs 12 gelöst.

Mit dem Gestängesteller nach der vorliegenden Erfindung können die vorstehend beschriebenen Schwierigkeiten bzw. Nachteile vermieden werden, da der Gestängesteller eine geringe Anzahl von Einzelteilen aufweist, der Aufbau durch einfach herstellbare Einzelteile erfolgt, und die Einzelteile über eine hohe Verschleißfestigkeit verfügen.

Ein erfindungsgemäßer Gestängesteller für eine Trommelbremse zum Nachstellen des bremsbedingten Verschleißes insbesondere an den Bremsbelägen, mit einer Überlastkupplung und einer Einwegdreh- bzw. Richtungskupplung, ist durch eine Kugelrampenkupplung gekennzeichnet, die durch eine Druckfeder vorgespannt ist, und durch eine Kegelkupplung.

In einer anderen Ausgestaltung weist der Gestängesteller einen Aufbau mit zwei Baugruppen auf, wobei die eine Baugruppe die Kugelrampenkupplung und die Kegelkupplung aufweist, und wobei die andere Baugruppe vorzugsweise die Funktion der Richtungskupplung realisiert.

In einer weiteren bevorzugten Ausgestaltung weist der Gestängesteller zwei Baugruppen in folgender Aufteilung auf, wobei die eine Baugruppe die Überlastkupplung aufweist, und wobei die andere Baugruppe die Kugelrampenkupplung und die Kegelkupplung mit den Funktionen Richtungskupplung, manuelle Rückstellung und Kraftübertragung aufweist. Damit wird eine vorteilhafte Funktionsverteilung möglich, bei welcher die zwei Baugruppen in einem einfachen Aufbau mit geringer Fehleranfälligkeit angeordnet sind.

Hierbei ist es bevorzugt vorgesehen, dass die Kugelrampenkupplung aus gegenüber liegend angeordneten Stirnflächen besteht, die jeweils mit einer Kugelrampenkontur für dazwischen angeordnete Kugeln ausgebildet sind. Hierbei ist es besonders vorteilhaft, dass diese Bauteile kugelgelagert ausgebildet sind, da so ein hoher Wirkungsgrad ermöglicht wird.

Vorteilhaft ist dabei, dass durch einfache Herstellung die Kugelrampenkonturen der Stirnflächen der Kugelrampenkupplung unterschiedliche Steigungswinkel aufweisen, was insbesondere vorteilhaft ist, wenn der erste Steigungswinkel der Kugelrampenkontur, die beim Nachstellen die Antriebsseite bildet, kleiner ist als der zweite Steigungswinkel der Kugelrampenkontur, die beim Nachstellen die Abtriebsseite bildet, da so eine Richtungskupplung ermöglicht wird.

In einer alternativen Ausgestaltung ist vorgesehen, dass die Rampenkonturen kurvenförmige Ausbildungen mit unterschiedlichen Krümmungsradien aufweisen.

Die zwischen den Rampenkonturen vorgesehenen Kugeln sind in einem Kugelkäfig angeordnet, der von der Druckfeder dergestalt vorgespannt ist, dass die Kugeln beim Nachstellen an den Kugelrampen für eine Kraftübertragung anliegen. Hierbei ist es bevorzugt, dass die Feder bzw. Druckfeder als eine Reibfeder ausgebildet ist. Dabei ergibt sich ein exaktes Funktionsverhalten auf Grund der Verwendung von präzisen und reibungsunabhängigen Bauteilen.

In einer bevorzugten Ausführungsform ist die Überlastkupplung der einen Baugruppe durch eine mit einem feststehenden Arretierungsring reibschlüssig verbundene Steuerscheibe gebildet. Hierbei ist es von Vorteil, dass die Steuerscheibe zwischen zwei Reibscheiben angeordnet ist, welche von einer Tellerfeder vorgespannt sind. Die Spannung der Tellerfeder ist über deren Aufbau einfach vorher festlegbar. Weiterhin sind die erforderlichen Teile von geringer Anzahl und einfach herstell- und leicht zusammenbaubar.

Eine erfindungsgemäße Trommelbremse weist den erfindungsgemäßen Gestängesteller auf.

Weitere Vorteile, Einzelheiten und Merkmale der Erfindung sind der folgenden detaillierten Beschreibung im Zusammenhang mit den beigefügten Zeichnungen zu entnehmen.

Die Erfindung wird im Folgenden anhand des in den Figuren der Zeichnung dargestellten Ausführungsbeispiels näher erläutert. Hierbei zeigt:
- Fig. 1: eine beispielhafte Ausführungsform eines erfindungsgemäßen Gestängestellers in unterschiedlichen Schnittdarstellungen, wobei eine Achse des Gestängestellers im Längsschnitt gezeigt ist;
- Fig. 1a: einen Querschnitt des Gestängestellers nach Fig. 1;
- Fig. 1b: einen Querschnitt des Gestängestellers nach Fig. 1 längs der Linie E-F;
- Fig. 1c: eine vergrößerte Darstellung der markierten Einzelheit des Gestängestellers nach Fig. 1a;
- Fig. 2: den Gestängesteller nach Fig. 1 in einer Ausgangsstellung;
- Fig. 3: den Gestängesteller nach Fig. 1 in einer zweiten Zuspannstellung;
- Fig. 4: den Gestängesteller nach Fig. 1 in einer ersten Zuspannstellung;
- Fig. 5: den Gestängesteller nach Fig. 1 in einer dritten Zuspannstellung;
- Fig. 6: den Gestängesteller nach Fig. 1 in einer ersten Lösestellung;
- Fig. 7: den Gestängesteller nach Fig. 1 in einer zweiten Lösestellung;
- Fig. 8: den Gestängesteller nach Fig. 1 in einer Ruhestellung;
- Fig. 9: den Gestängesteller nach Fig. 1 in einer vergrößerten Teilschnittdarstellung seines oberen Abschnitts;
- Fig. 10: eine schematische Darstellung einer Kugelrampenkupplung;
- Fig. 11: den Gestängesteller nach Fig. 1 in einer Arbeitsstellung;
- Fig. 12: den Gestängesteller nach Fig. 1 in einer Stellung mit verdrehter Steuerscheibe;
- Fig. 13: den Gestängesteller nach Fig. 1 in einer Zuspannstellung mit Selbstjustierung der Steuerscheibe; und
- Fig. 14: den Gestängesteller nach Fig. 1 mit justierter Steuerscheibe.

Gleiche Bezugszeichen in den einzelnen Figuren bezeichnen gleiche bzw. funktionell einander entsprechende Teile.

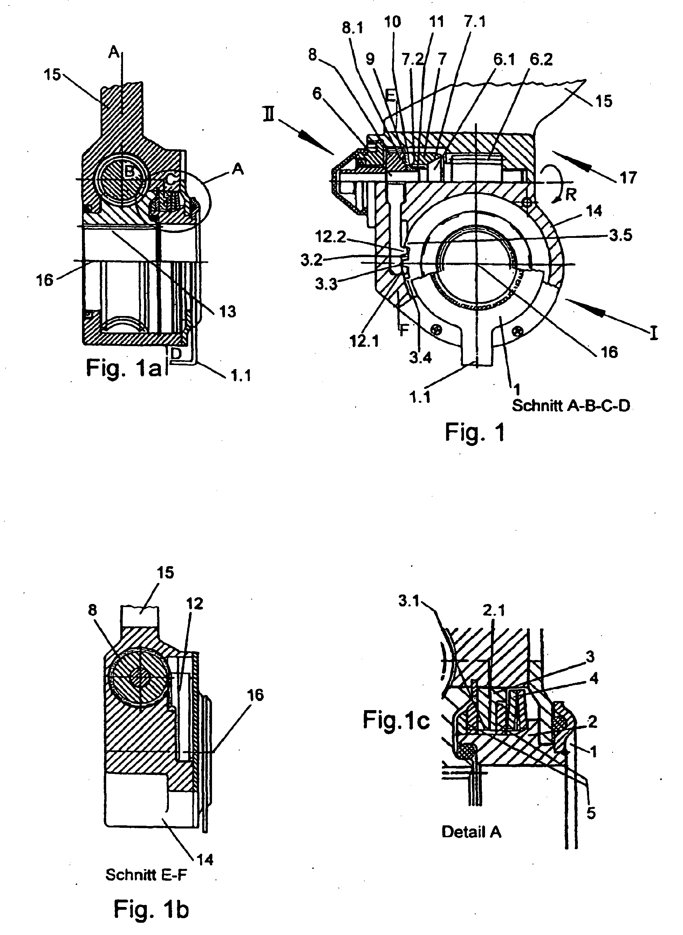

Fig. 1 zeigt eine beispielhafte Ausführungsform eines erfindungsgemäßen Gestängestellers 17 in unterschiedlichen Schnittdarstellungen, wobei eine Achse 6 des Gestängestellers 17 im Längsschnitt gezeigt ist.

Die Nachstellermechanik dieser Ausführungsform des Gestängestellers 17 besteht im Wesentlichen aus zwei Funktionsbaugruppen. Nämlich aus einer Baugruppe I mit den Funktionen Selbstjustierung und Überlastschutz, welche aus folgenden Einzelteilen besteht: einem Arretierungsring 1 mit einem angeformten Arretierungsarm 1.1; einer Buchse 2 mit Außenprofil 2.1; einer Steuerscheibe bzw. Kontrollscheibe 3 mit axialer Innenprofilierung 3.1 und Kerben 3.2 am Umfang; zwei Tellerfedern 4 und zwei Reibscheiben 5.

Eine weitere Baugruppe II mit den Funktionen Richtungskupplung (Freilauf), manuelle Rückstellung und Kraftübertragung besteht aus folgenden Einzelteilen: einer Achse 6 mit Außenkegel 6.1 und Schnecke 6.2; einer Klemmbuchse 7 mit Innenkegel 7.1 und einer stirnseitigen Kugelrampenkontur 7.2; einem Zahnrad 8 mit einer stirnseitigen Rampenkontur 8.2; mehreren Klemmkugeln 9; einem Kugelkäfig 10 mit einer Reibfeder 11; einer Zahnstange 12; und aus einem Schneckenrad 13 mit Innenprofilierung.

Die Elemente Kugelrampenkontur 7.2, Rampenkontur 8.1 und die Klemmkugeln 9 bilden eine Kugelrampenkupplung 7.2, 8.1, 9 und die Elemente Außenkegel 6.1 und Innenkegel 7.1 bilden eine Kegelkupplung 6.1, 7.1. Die Kugelrampenkupplung 7.2, 8.1, 9 und die Kegelkupplung 6.1, 7.1 sind so auf einander abgestimmt, dass in einer Drehrichtung um die Längsachse der Achse 6, das heißt in Zustellrichtung R, eine Selbsthemmung und damit eine Sperrwirkung der Kugelrampenkupplung und in Löserichtung, also der zur Zustellrichtung R gegenläufigen Drehrichtung, eine Freilaufwirkung gegeben ist. Das bedeutet für den letzteren Fall, dass ein erstes Drehmoment M_{Kugeln} der Kugelrampenkupplung kleiner ist als ein zweites Drehmoment M_{Reib} der Kegelkupplung.

Der Gestängesteller 17 ist in einem Gehäuse 14 angeordnet, wobei eine Bremswellenachse 16 des Schneckenrads 13 senkrecht auf der Zeichnungsebene steht und die Längsachse der Achse 6 des Gestängestellers 17 rechtwinklig zur Bremswellenachse 16 verläuft. In diesem Beispiel ist oberhalb Achse 6 am Gehäuse 14 ein Hebel 15 angeordnet, welcher in Wirkverbindung mit einem nicht dargestellten Bremszylinder steht.

Innerhalb des Schneckenrads 13 befindet sich eine ebenfalls nicht dargestellte Bremswelle, die an ihrem hier nicht gezeigten Ende eine S-Nocken-Ausbildung aufweist, welche in bekannter Weise die Bremsbacken einer Trommelbremse betätigt. Die Bremswelle verläuft in Richtung der Bremswellenachse 16 und ist mit dem Schneckenrad 13 drehfest verbunden. Durch Betätigung des Hebels 15 in der durch Pfeile dargestellten Richtung Z erfolgt ein Auseinanderdrücken der Bremsbeläge und in der Richtung L erfolgt ein Lösen der Bremsbeläge in bekannter Weise. Die Richtung Z wird als Zuspannrichtung und die Richtung L als Löserichtung bezeichnet.

Es folgt nun eine Funktionsbeschreibung einer automatischen Nachstellfunktion mit Bezug auf die Figuren 1 bis 8.

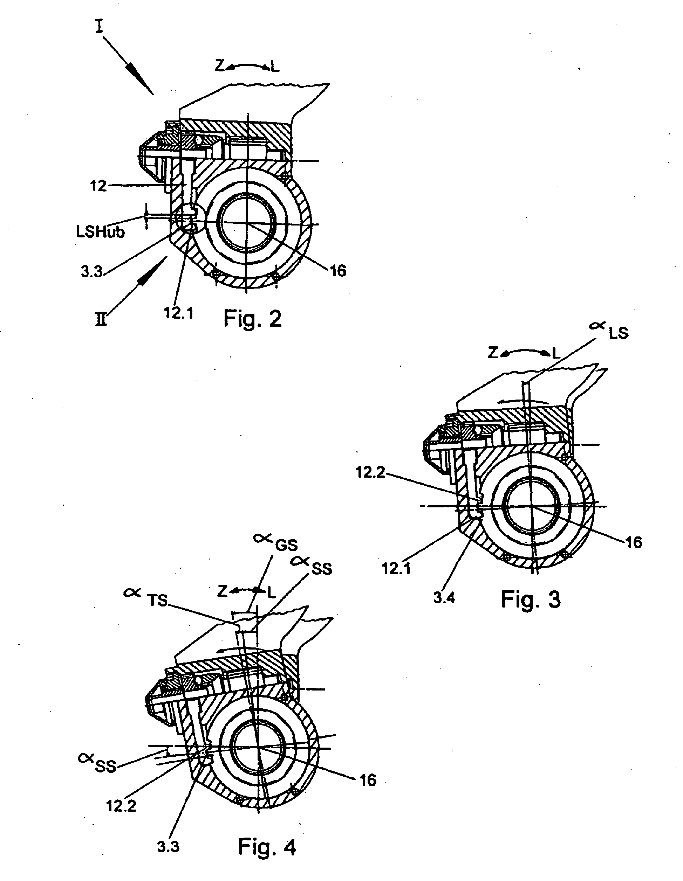

Die Nachstellung findet am Anfang eines Bremsvorgangs statt. Wird in den zugehörigen Bremszylinder ein Druck eingebracht, so fährt die Kolbenstange des Bremszylinders aus und betätigt über den Hebel 15 das Gehäuse 14, wobei eine Schwenkbewegung um die Bremswellenachse 16 in Zuspannrichtung Z um einen ersten Winkel α_{LS} erfolgt (Fig. 3). Die dazu erforderliche Kraftübertragung verläuft vom Hebel 15 über den oberen Abschnitt des Gehäuses 14, die Achse 6 und die Schnecke 6.2 auf das Schneckenrad 13, welches in drehfester Verbindung mit der Bremswelle steht, wie oben erläutert ist und anhand der Fig. 1a ersichtlich ist.

Die Zahnstange 12 steht mit der Achse 6 des Gestängestellers 17 über das Zahnrad 8 in Wirkverbindung, wobei die Zahnstange 12 verschiebbar angeordnet ist. An ihrem unteren Ende weist sie einen ersten Nocken 12.1 und einen zweiten Nocken 12.2 auf, die in einem Abstand angeordnet sind. Die Nocken 12.1 und 12.2 stehen jeweils in Eingriff mit Kerben, welche durch einen Zahn 3.3 getrennt sind und an einem Abschnitt des Umfangs einer Steuerscheibe 3 angeordnet sind. Im Weiteren wird nur eine Kerbe 3.2 betrachtet. Die Steuerscheibe 3 ist über einen Arretierungsring 1 mit einem Arretierungsarm 1.1 reibschlüssig so befestigt, dass sie relativ zu der Schwenkbewegung des Gehäuses 14 feststeht. In der Fig. 1c ist eine vergrößerte Darstellung des markierten Bereichs in Fig. 1a gezeigt. Die Steuerscheibe 3 ist in diesem Beispiel zwischen zwei Reibscheiben 5 reibschlüssig gehalten, welche von einer Tellerfeder 4 vorgespannt sind. Durch die Spannung der Tellerfeder 4 und der Reibungseigenschaften der Reibpaarung Reibscheiben 5 und Steuerscheibe 3 ist die Größe eine Festhaltemoments vorher festlegbar.

In der ersten Phase des Bewegungsablaufs wird ein so genannter Leerweg zwischen dem zweiten Nocken 12.2 der Zahnstange 12 und der Kerbe 3.2 in der feststehenden Steuerscheibe 3 zurückgelegt. Durch die Größe dieses Leerwegs wird das Lüftspiel LS Hub zwischen Bremsbacken und Bremstrommel bestimmt (Fig. 2).

In der nächsten Phase kommen die Nocken 12.1, 12.2 der Zahnstange 12 an einer Schulter 3.4, 3.5 der Steuerscheibe 3 zur Anlage (Fig. 3). Hierbei gibt es nun zwei mögliche Betriebszustände.

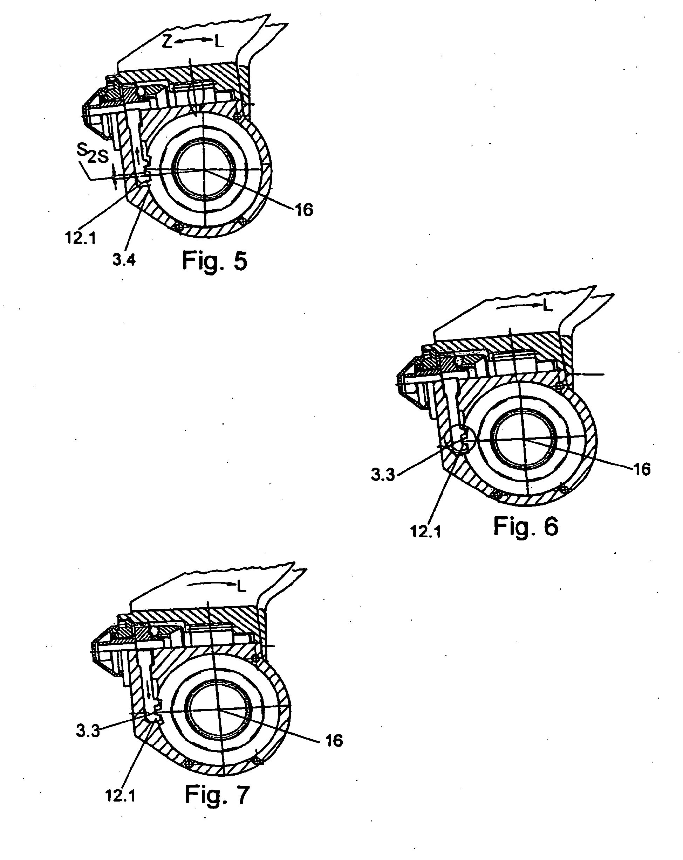

Fall 1: Wenn das Lüftspiel LS bzw. LS Hub korrekt ist (Fig. 2), kommen zeitgleich mit der Anlage des Nockens 12.2 der Zahnstange 12 die Bremsbacken zur Anlage an der Trommelinnenwand. Eine Verstellung ist nun wegen der hohen Kräfte nicht mehr möglich, jedoch wird wegen der Elastizitäten in den Bauteilen der Trommelbremse eine weitere Drehung um einen dritten Winkel α_{SS} am Gestängesteller 17 um die Bremswellenachse 16 durchgeführt. Da das Zahnrad 8 nun auf Grund der hohen Kräfte nicht mehr verdreht werden kann, ist auch eine Bewegung der Zahnstange 12 nicht mehr möglich. Da jedoch die Zahnstange 12 mit der Steuerscheibe 3 gekoppelt ist und die Steuerscheibe 3 drehfest zur Achse arretiert ist, muss nun die Überlastschutzfunktion von Baugruppe I erfolgen. Ab einer, von den Tellerfedern 4 und den Reibscheiben 5 bestimmten Kraftschwelle, kommt es zu einer Relativbewegung zwischen Steuerscheibe 3 und Reibscheiben 5. Eine Bewegung des Gestängestellers 17 um einen Weg S_{2S} (Fig. 5) ist somit trotz blockierter Nachstellermechanik ohne Schädigung möglich (Fig. 4). Somit wird ein zweiter Winkel α_{GS} als Gesamtverdrehwinkel erhalten.

Fall 2: Wenn das Lüftspiel zwischen Bremsbacken und Bremstrommel zu groß ist, wird durch die Zahnstange 12 eine Drehbewegung in das Zahnrad 8 eingeleitet. Über die Kugelrampenkupplung 7.2, 8.1, 9 und die Kegelkupplung 6.1, 7.1 wird die Bewegung auf die Schnecke 6.2, das Schneckenrad 13 und schließlich auf die Bremswelle übertragen. Somit wird das Spiel zwischen Bremsbacke und Bremstrommel reduziert (Fig. 5). Wenn im weiteren Verlauf die Bremsbacken zur Anlage an der Bremstrommel kommen, ist der Funktionsablauf wie unter Fall 1 beschrieben.

Beim Lösen der Bremse wird der Gestängesteller 17 durch die Rückstellkräfte wieder in die Ausgangsposition zurückgebracht. Dabei bewegen sich zunächst die Nocken 12.1, 12.2 der Zahnstange 12 auf die andere Seite der Anlageschulter in den Kerben in der Steuerscheibe 3, anschließend wird die Zahnstange 12 in die Ausgangslage geschoben, und schließlich wird die Steuerscheibe 3 wieder in die ursprüngliche Position gebracht (Fig. 6, 7, 8).

### Manuelle Rückstellung des Gestängestellers 17

Bei Wechsel der Bremsbeläge ist es notwendig, den Gestängesteller 17 manuell in die Ausgangsstellung zurückzudrehen. Dabei muss die Schnecke 6.2 gegen die Sperrwirkung des Freilaufs verdreht werden, das heißt gegen die Sperrwirkung der Kugelrampenkupplung 7.2, 8.1, 9. Um dieses zu ermöglichen, werden die Klemmkugeln 9 mit Hilfe eines Kugelkäfigs 10 geführt, wie in Fig. 1 verdeutlicht ist. Der Kugelkäfig 10 ist in diesem Ausführungsbeispiel mit einer so genannten Reibfeder 11 mit der Achse 6, die als Rückdrehachse verwendet wird, reibschlüssig verbunden. Da beim manuellen Zurückdrehen die Krafteinleitung in die Sperrkupplung von der anderen Seite, also von der Kegelkupplung 6.1, 7.1 erfolgt, ist es durch die Wirkung der Reibfeder 11 und der speziellen Gestaltung der Kugelrampengeometrie möglich, die Sperrwirkung auszuschalten. Somit kann der Gestängesteller 17 mit relativ geringer Kraft zurückgedreht werden.

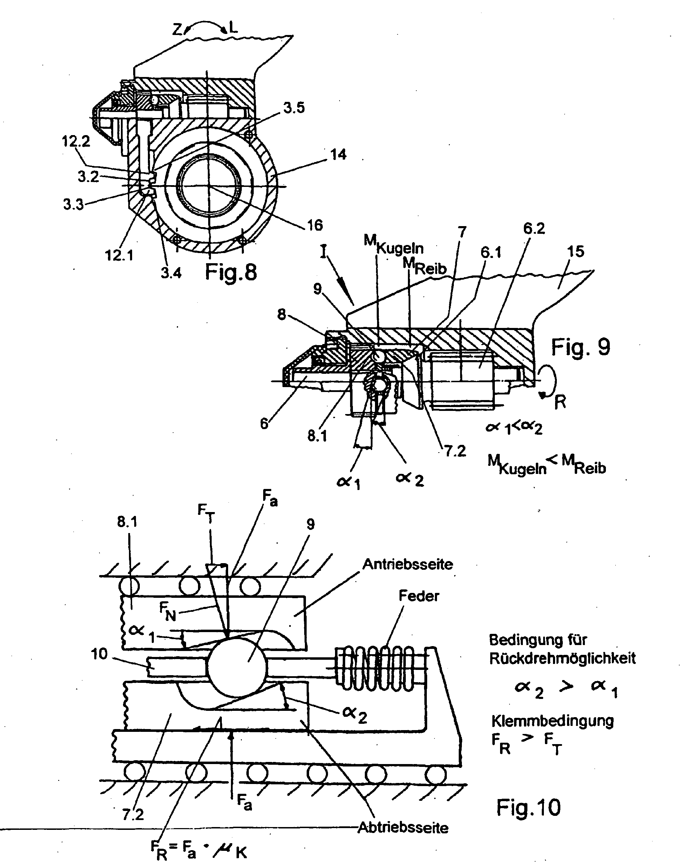

Hierzu wird nun Fig. 9 und 10 betrachtet. Die Kugelrampen 7.2, 8.1 weisen einen ersten Steigungswinkel α₁ und einen zweiten Steigungswinkel α₂ auf. In diesem Beispiel ist der erste Steigungswinkel α₁ kleiner als der zweite Steigungswinkel α₂ ausgebildet, wobei der erste Steigungswinkel α₁ der Steigungswinkel der Rampenkontur 8.1 des Zahnrads 8 ist, welches von der Zahnstange 12 beim Nachstellvorgang angetrieben wird. Der zweite Steigungswinkel α₂ ist der Steigungswinkel der Kugelrampenkontur 7.2 der abtriebsseitigen Kegelkupplung, nämlich des Innenkegels 7.1. In Fig. 10 ist dieses Verhältnis schematisch vergrößert dargestellt. Wird nun, wie beim manuellen Zurückdrehen der Fall, der Kugelkäfig 10 mit den Klemmkugeln 9 zurückgedreht, vergrößert sich der Abstand der Kugelbahnen zwischen den beiden Kupplungshälften 7.2, 8.1, wobei eine Sperrwirkung ausgeschaltet bzw. vermieden wird. Die Kugeln 9 gelangen in die in Fig. 10 zu erkennende linksseitige Mulde. Dabei wird durch den sich vergrößernden Abstand der Kugelrampenkonturen 7.2, 8.1 die Anpresskraft der Kegelkupplung 6.1, 7.1 verringert, welche dabei die Verdrehung der Achse 6 ermöglicht. Kommt die Krafteinleitung hingegen von der antriebsseitigen Kupplungshälfte, hier: Rampenkontur 8.1 des Zahnrads 8, so werden die Klemmkugeln 9 durch den über die Reibfeder 11 gehemmten Kugelkäfig 10 an die Kugelrampen angelegt, was im rechtsseitigen Bereich in Fig. 10 zu erkennen ist, und es wird somit eine Klemmwirkung herbeigeführt. Dabei werden die Kegelabschnitte der Kegelkupplung 6.1, 7.1 zusammengepresst, so dass ihr Reibschluss ansteigt.

Für eine Klemmbedingung der Kugelrampenkupplung gilt nach Fig. 10, dass die Reibkraft F_{R} größer ist als die Tangentialkraft F_{T}, wobei die Tangentialkraft F_{T} ein erstes Drehmoment M_{Kugeln} der Kugelrampenkupplung und die Reibkraft F_{R} ein zweites Drehmoment M_{Reib} der Kegelkupplung darstellt. Hieraus lässt sich die Bedingung für die Rückdrehmöglichkeit aus den bekannten Verhältnissen, die nicht näher erläutert werden sollen, der in Fig. 10 dargestellten Reibkräfte erkennen, nämlich dass α₁ kleiner als α₂ sein muss.

### Automatische Justierung beim Einbau des Gestängestellers 17

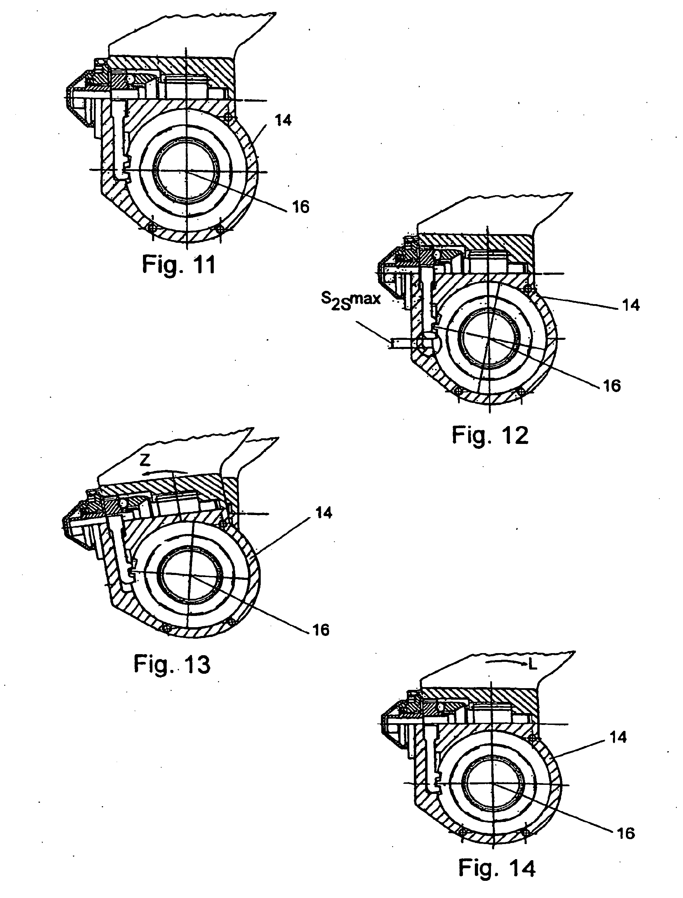

Durch die reibschlüssige Verbindung von Steuerscheibe 3 und Arretierring 1 kann der Arretierarm 1.1 des Arretierrings 1 in beliebiger Position fixiert werden. Die mit der Steuerscheibe 3 gekoppelte Zahnstange 12 wird dabei innerhalb des vorbestimmten Arbeitswegs verschoben, wie oben erläutert ist. Wird zum Beispiel die Steuerscheibe 3 beim Einbau des Gestängestellers 17 nach links gegen den Uhrzeigersinn verdreht (Fig. 11), so dass die Zahnstange 12 den unteren Anschlag erreicht, ist die vorgesehene Arbeitsstellung schon vorhanden und eine weitere Justierung nicht notwendig.

Wird die Steuerscheibe 3 nach rechts im Uhrzeigersinn verdreht, wird die Zahnstange 12 im Extremfall bis zu einem oberen Anschlag verschoben, wie Fig. 12 zeigt. Wenn nun die erste Bremsbetätigung erfolgt, wird die Steuerscheibe 3 gegen die Reibkraft der Reibscheiben 5 nach links gedreht. Beim Lösen der Bremse bleibt die Steuerscheibe 3 in der vorher erreichten Position stehen, da die Zahnstange 12 wegen ihrer Kopplung mit Baugruppe I und der damit verbundenen Freilauffunktion keine Rückstellkraft ausüben kann. Die vorgesehene Arbeitsstellung wird somit erreicht, wie aus den Figuren 12, 13, 14 ersichtlich wird.

Auf diese Weise wird ein Gestängesteller 17 mit folgenden vorteilhaften Merkmalen geschaffen:
1.) Kostengünstige Herstellung der meisten Einzelteile, im Wesentlichen durch spanlose Formung.
2.) Einfacher Aufbau und somit geringe Fehleranfälligkeit.
3.) Hohe Robustheit durch Vermeidung filigraner Bauteile.
4.) Vermeidung von Fehlmontagen durch die Selbstjustierung.
5.) Konstantes Funktionsverhalten während der gesamten Lebensdauer auf Grund des konstruktiven Aufbaus mit verschleißfesten Funktionseinheiten.
6.) Manuelle Rückstellung mit geringem Kraftaufwand. Hierbei kann die Klemmbuchse 7 auch fixiert werde oder ein Stift auf Klemmbuchse 7 zum Klemmen aufgebracht werden.

Die oben beschriebenen Ausführungsformen sind nur beispielhaft und schränken die Erfindung nicht ein. Variationen und Modifikationen sind dem Fachmann offensichtlich und möglich.

So ist es zum Beispiel möglich, dass die Zahnstange 9 auch einen zweiten Nocken und die Steuerscheibe eine zweite Kerbe aufweisen kann. Weitere Nocken und Kerben sind ebenfalls möglich.

Es ist denkbar, dass die Rampenkonturen mehr als zwei verschiedene Steigungswinkel aufweisen können. Selbstverständlich sind auch kurvenförmige Laufbahnen möglich.

### Bezugszeichenliste

- 1: Arretierungsring
- 1.1: Arretierungsarm
- 2: Buchse
- 2.1: Außenprofil
- 2.2: Axialkugellager
- 3: Steuerscheibe
- 3.1: Innenprofilierung
- 3.2: Kerbe
- 3.3: Zahn
- 3.4: Erste Schulter
- 3.5: Zweite Schulter
- 4: Tellerfeder
- 5: Reibscheibe
- 6: Achse
- 6.1: Außenkegel
- 6.2: Schnecke
- 7: Klemmbuchse
- 7.1: Innenkegel
- 7.2: Kugelrampenkontur
- 8: Zahnrad
- 8.1: Rampenkontur
- 9: Klemmkugel
- 10: Kugelkäfig
- 11: Reibfeder
- 12: Zahnstange
- 12.1: Erster Nocken
- 12.2: Zweiter Nocken
- 13: Schneckenrad
- 14: Gehäuse
- 15: Hebel
- 16: Bremswellenachse
- 17: Gestängesteller

- I: Erste Baugruppe
- II: Zweite Baugruppe

- α₁: Erster Steigungswinkel
- α₂: Zweiter Steigungswinkel
- α_{LS}: Erster Winkel
- α_{GS}: Zweiter Winkel
- α_{SS}: Dritter Winkel
- α_{TS}: Vierter Winkel
- µ_{κ}: Reibwert
- Fₐ: Axialkraft
- F_{N}: Normalkraft
- F_{R}: Reibkraft
- F_{T}: Tangentialkraft
- L: Löserichtung
- LS: Lüftspiel
- M_{Kugeln}: Erstes Drehmoment
- M_{Reib}: Zweites Drehmoment
- R: Zustellrichtung
- S_{2S}: Weg
- Z: Zuspannrichtung

## Patentansprüche

1. Gestängesteller (17) für eine Trommelbremse zum Nachstellen des bremsbedingten Verschleißes insbesondere an den Bremsbelägen, mit einer Überlastkupplung und einer Einwegdreh- bzw. Richtungskupplung, **gekennzeichnet durch** eine Kugelrampenkupplung (7.2, 8.1, 9), die **durch** eine Feder, insbesondere eine Druckfeder, vorzugsweise eine Reibfeder vorgespannt ist, und **durch** eine Kegelkupplung (6.1, 7.1).

2. Gestängesteller (17) nach Anspruch 1, **gekennzeichnet durch** einen Aufbau mit zwei Baugruppen, wobei die eine Baugruppe die Kugelrampenkupplung (7.2, 8.1, 9) und die Kegelkupplung (6.1, 7.1) aufweist, und wobei die andere Baugruppe vorzugsweise die Funktion der Richtungskupplung realisiert.

3. Gestängesteller (17) nach Anspruch 1, **gekennzeichnet durch** einen Aufbau mit zwei Baugruppen (I, II), wobei die eine Baugruppe (I) die Überlastkupplung aufweist, und wobei die andere Baugruppe (II) die Kugelrampenkupplung (7.2, 8.1, 9) und die Kegelkupplung (6.1, 7.1) mit den Funktionen Richtungskupplung, manuelle Rückstellung und Kraftübertragung aufweist.

4. Gestängesteller (17) nach einem der Ansprüche 1 bis 3, **dadurch gekennzeichnet, dass** die Kugelrampenkupplung (7.2, 8.1, 9) aus gegenüber liegend angeordneten Stirnflächen besteht, die jeweils mit einer Kugelrampenkontur (7.2, 8.1) für dazwischen angeordnete Klemmkugeln (9) ausgebildet sind.

5. Gestängesteller (17) nach Anspruch 4, **dadurch gekennzeichnet, dass** die Kugelrampenkonturen (7.2, 8.1) der Stirnflächen der Kugelrampenkupplung (7.2, 8.1, 9) unterschiedliche Steigungswinkel (α₁, α₂) aufweisen.

6. Gestängesteller (17) nach Anspruch 5, **dadurch gekennzeichnet, dass** der erste Steigungswinkel (α₁) der Kugelrampenkontur (8.1), die beim Nachstellen die Antriebsseite bildet, kleiner ist als der zweite Steigungswinkel (α₂) der Kugelrampenkontur (7.2), die beim Nachstellen die Abtriebsseite bildet.

7. Gestängesteller (17) nach einem der Ansprüche 4 bis 6, **dadurch gekennzeichnet, dass** die Rampenkonturen (7.2, 8.1) kurvenförmige Ausbildungen mit unterschiedlichen Krümmungsradien aufweisen.

8. Gestängesteller (17) nach einem der Ansprüche 4 bis 7, **dadurch gekennzeichnet, dass** die zwischen den Rampenkonturen (7.2, 8.1) vorgesehenen Klemmkugeln (9) in einem Kugelkäfig (10) angeordnet sind, der von der Feder (11) dergestalt vorgespannt ist, dass die Klemmkugeln (9) beim Nachstellen an den Kugelrampen (7.2, 8.1) für eine Kraftübertragung anliegen.

9. Gestängesteller (17) nach einem der Ansprüche 3 bis 8, **dadurch gekennzeichnet, dass** die Überlastkupplung der Baugruppe (I) durch eine mit einem feststehenden Arretierungsring (1) reibschlüssig verbundene Steuerscheibe (3) gebildet ist.

10. Gestängesteller (17) nach Anspruch 9, **dadurch gekennzeichnet, dass** die Steuerscheibe (3) zwischen zwei Reibscheiben (5) angeordnet ist, welche von einer Tellerfeder (4) vorgespannt sind.

11. Trommelbremse mit einem Gestängesteller nach einem der vorstehenden Ansprüche 1 bis 10.

## Claims

1. A linkage adjuster (17) for a drum brake for adjusting the braking-induced wear in particular at the friction linings, having an overload clutch and having a one-way rotational clutch or directional clutch, **characterized by** a ball ramp clutch (7.2, 8.1, 9) which is preloaded by a spring, in particular a pressure spring, preferably a friction spring, and by a cone clutch (6.1, 7.1).

2. The linkage adjuster (17) as claimed in claim 1, **characterized by** a construction with two modules, with the one module having the ball ramp clutch (7.2, 8.1, 9) and the cone clutch (6.1, 7.1), and with the other module preferably performing the function of the directional clutch.

3. The linkage adjuster (17) as claimed in claim 1, **characterized by** a construction with two modules (I, II), with the one module (I) having the overload clutch, and with the other module (II) having the ball ramp clutch (7.2, 8.1, 9) and the cone clutch (6.1, 7.1) with the functions of the directional clutch, manual restoring and force transmission.

4. The linkage adjuster (17) as claimed in one of claims 1 to 3, **characterized in that** the ball ramp clutch (7.2, 8.1, 9) is composed of oppositely arranged end faces which are in each case formed with a ball ramp contour (7.2, 8.1) for clamping balls (9) which are arranged in between.

5. The linkage adjuster (17) as claimed in claim 4, **characterized in that** the ball ramp contours (7.2, 8.1) of the end faces of the ball ramp clutch (7.2, 8.1, 9) have different gradient angles (α₁, α₂).

6. The linkage adjuster (17) as claimed in claim 5, **characterized in that** the first gradient angle (α₁) of the ball ramp contour (8.1), which forms the drive input side during adjustment, is smaller than the second gradient angle (α₂) of the ball ramp contour (7.2), which forms the drive output side during adjustment.

7. The linkage adjuster (17) as claimed in one of claims 4 to 6, **characterized in that** the ramp contours (7.2, 8.1) have curved formations with different radii of curvature.

8. The linkage adjuster (17) as claimed in one of claims 4 to 7, **characterized in that** the clamping balls (9) which are provided between the ramp contours (7.2, 8.1) are arranged in a ball cage (10) which is preloaded by the spring (11) in such a way that the clamping balls (9), during adjustment, bear against the ball ramps (7.2, 8.1) for a force transmission.

9. The linkage adjuster (17) as claimed in one of claims 3 to 8, **characterized in that** the overload clutch of the module (I) is formed by a control disk (3) which is connected in a frictionally engaging manner to a stationary locking ring (1).

10. The linkage adjuster (17) as claimed in claim 9, **characterized in that** the control disk (3) is arranged between two friction disks (5) which are preloaded by a plate spring (4).

11. A drum brake having a linkage adjuster as claimed in one of the preceding claims 1 to 10.

## Revendications

1. Régleur ( 17 ) de timonerie destiné à un frein à tambour, conçu pour le rattrapage de l'usure due au freinage, notamment de l'usure des garnitures de frein, comportant un accouplement de surcharge et un accouplement rotatif unidirectionnel ou un accouplement directionnel, **caractérisé par** un accouplement ( 7.2, 8.1, 9 ) à rampe à billes, qui est précontraint par un ressort, en particulier un ressort de pression, de préférence un ressort de friction, et par un accouplement ( 6.1, 7.1 ) conique.

2. Régleur ( 17 ) de timonerie suivant la revendication 1, **caractérisé par** une structure comportant deux sous-ensembles, sachant qu'un des sous-ensembles comprend l'accouplement ( 7.2, 8.1, 9 ) à rampe à billes et l'accouplement ( 6.1, 7.1 ) conique, et sachant que l'autre sous-ensemble assure de préférence la fonction de l'accouplement directionnel.

3. Régleur ( 17 ) de timonerie suivant la revendication 1, **caractérisé par** une structure comportant deux sous-ensembles ( I, II ), sachant qu'un ( I ) des sous-ensembles comprend l'accouplement de surcharge, et sachant que l'autre sous-ensemble ( II ) comprend l'accouplement ( 7.2, 8.1, 9 ) à rampe à billes et l'accouplement ( 6.1, 7.1 ) conique, en assurant les fonctions d'accouplement directionnel, de rappel manuel et de transmission de force.

4. Régleur ( 17 ) de timonerie suivant l'une des revendications 1 à 3, **caractérisé en ce que** l'accouplement ( 7.2, 8.1, 9 ) à rampe à billes est constitué de faces frontales disposées en vis-à-vis, qui sont respectivement pourvues d'un contour ( 7.2, 8.1 ) de rampe à billes pour des billes ( 9 ) de serrage disposées entre elles.

5. Régleur ( 17 ) de timonerie suivant la revendication 4, **caractérisé en ce que** les contours ( 7.2, 8.1 ) de rampe à billes des faces frontales de l'accouplement ( 7.2, 8.1, 9 ) à rampe à billes possèdent des angles ( α₁, α₂ ) de pente différents.

6. Régleur ( 17 ) de timonerie suivant la revendication 5, **caractérisé en ce que** le premier angle ( α₁ ) de pente du contour ( 8.1 ) de rampe à billes, qui forme le côté menant lors du rattrapage, est inférieur au deuxième angle ( α₂ ) de pente du contour ( 7.2 ) de rampe à billes, qui forme le côté mené lors du rattrapage.

7. Régleur ( 17 ) de timonerie suivant l'une des revendications 4 à 6, **caractérisé en ce que** les contours ( 7.2, 8.1 ) de rampe possèdent des formes incurvées avec des rayons de courbure différents.

8. Régleur ( 17 ) de timonerie suivant l'une des revendications 4 à 7, **caractérisé en ce que** les billes ( 9 ) de serrage prévues entre les contours ( 7.2, 8.1 ) de rampe sont disposées dans une cage ( 10 ) à billes qui est précontrainte par le ressort ( 11 ) de telle sorte que, lors du rattrapage, les billes ( 9 ) de serrage s'appliquent contre les rampes ( 7.2, 8.1 ) à billes pour une transmission de force.

9. Régleur ( 17 ) de timonerie suivant l'une des revendications 3 à 8, **caractérisé en ce que** l'accouplement de surcharge du sous-ensemble ( I ) est formé par un disque ( 3 ) de commande assemblé par friction à une bague ( 1 ) de blocage à poste fixe.

10. Régleur ( 17 ) de timonerie suivant la revendication 9, **caractérisé en ce que** le disque ( 3 ) de commande est disposé entre deux disques ( 5 ) de friction qui sont précontraints par un ressort ( 4 ) à disque.

11. Frein à tambour équipé d'un régleur de timonerie suivant l'une des revendications 1 à 10.
